# EUROPEAN PATENT APPLICATION

(11) **EP 4 510 221 A1**
(43) Date of publication of application: **19.02.2025**
(21) Application number: 24155956.6
(22) Date of filing: 06.02.2024
(51) Int. Cl.: H01M 4/136, H01M 4/1397, H01M 4/36, H01M 4/58, H01M 4/62, H01M 10/054, H01M 4/02

(54) **CATHODE MATERIAL AND PREPARATION METHOD THEREOF AND SODIUM ION BATTERY**

(30) Priority: 17.08.2023 CN 202311041962
(71) Applicant: Hubei Yuhao High-Tech New Material Co., Ltd., Shiyan City, Hubei Province 442000 (CN); Hubei Wanrun New Energy Technology Co., Ltd., Shiyan, Hubei 442500 (CN)
(72) Inventor: ZHANG, Wuxing, Shiyan City, 442500 (CN); PENG, Jiayu, Shiyan City, 442500 (CN); LIU, Shiqi, Shiyan City, 442500 (CN); FU, Wei, Shiyan City, 442500 (CN); YAN, Yizhi, Shiyan City, 442500 (CN); CHEN, Shitao, Shiyan City, 442500 (CN); DENG, Zhibin, Shiyan City, 442500 (CN); WU, Yulin, Shiyan City, 442500 (CN)
(74) Representative: Westphal, Mussgnug & Partner Patentanwälte mbB

(57) **Abstract**

The present invention relates to the field of sodium ion battery technology, in particular, to a cathode material, a preparation method thereof, and a sodium ion battery. The present invention relates to a cathode material including a Prussian Blue substrate, and a first coating layer and a second coating layer successively coated on the surface of the Prussian Blue substrate; a material forming the first coating includes a polymer of tannic acid; a material forming the second coating layer includes at least one of hexadecylamine, octadecylamine, octadecyl phosphate, N-phenyl-bis(trifluoromethanesulfonimide), 1H,1H,2H,2H-perfluorodecyl triethoxysilane, and 1H,1H,2H,2H-perfluorodecanethiol. The cathode material of the present invention effectively solves the problem of hygroscopicity of Prussian Blue cathode material and effectively improves the storage property and electrochemical performance of the cathode material in air.

## Description

### CROSS-REFERENCE TO RELATED APPLICATIONS

This application claims priority to Chinese patent application No. 202311041962.7 filed on August 17, 2023, which is incorporated herein by reference in its entirety.

### TECHNICAL FIELD

The present invention relates to the field of sodium ion battery technology, in particularly, to a cathode material, a preparation method thereof, and a sodium ion battery.

### BACKGROUND

Prussian Blue (PB) is an important cathode material for sodium ion batteries and commonly available as NaxMaM'b(CN)6·zH₂O, where 0<x<2, 0<a<1, 0<b<1, z>0, M and M' represent transition metals. The Prussian Blue cathode material has advantages such as high theoretical capacity, large gap position, adjustable chemical composition, and good structural stability, and exhibits excellent electrochemical performance. Further, the Prussian Blue cathode material has advantages of low cost, non-toxic and harmless, and low energy consumption and is easy to prepare, and thus is a promising cathode material for commercial application in the sodium ion battery.

However, Prussian Blue is still defective in functioning as a cathode material for sodium-ion batteries, because Prussian Blue is typically prepared by a simple chemical precipitation method, leading to the presence of vacancy defects and crystalline water in the material structure. The crystalline water in the material structure consists of adsorbed water, interstitial water, and coordinated water, and may severely and negatively impact the electrode material and the electrolyte, thereby causing problems such as affecting sodium-ion migration, undergoing side reactions with the electrolyte, and gas generation affecting battery safety. Although most of the adsorbed and interstitial water can be removed through high-temperature heat treatment, dehydrated Prussian Blue will rapidly reabsorb water due to its strong hygroscopic nature when being exposed to air. During the manufacturing process of the sodium-ion batteries, Prussian Blue undergoes processes such as pulping, coating, rolling, slicing, winding/laminating, liquid injection, formation, and packaging. Most of these processes, including coating, rolling, slicing and winding/laminating, are exposed to air. The hygroscopic nature of Prussian Blue leads to poor processability of electrode sheets of the sodium-ion batteries, and the absorbed moisture significantly impacts sodium storage performance and battery safety.

In view of the above, the present invention is proposed.

### SUMMARY

An object of the present invention is to provide a cathode material capable of effectively improving the storage stability and electrochemical performance of the cathode material in air by suppressing the hygroscopicity of the cathode material without affecting the electrochemical performance of Prussian Blue.

Another object of the present invention is to provide a preparation method of the above-mentioned cathode material, which is simple but is suitable for large-scale industrial production.

Still another object of the present invention is to provide a sodium ion battery including the above-described cathode material, which has excellent electrochemical properties.

In order to achieve the above-mentioned object of the present invention, the following technical schemes are adopted.

The present invention provides a cathode material including a Prussian Blue substrate, and a first coating layer and a second coating layer successively coating a surface of the Prussian Blue substrate,
where a material forming the first coating layer includes a polymer of tannic acid; and a material forming the second coating layer includes at least one of hexadecylamine, octadecylamine, octadecyl phosphate, N-phenyl-bis(trifluoromethanesulfonimide), 1H,1H,2H,2H-perfluorodecyl triethoxysilane, and 1H,1H,2H,2H-perfluorodecanethiol.

The present invention also provides a preparation method of the cathode material as described above, which includes the steps of
mixing tannic acid, formaldehyde, ammonium ions, a first solvent, and water to obtain a tannic acid-containing precursor solution;
subjecting the Prussian Blue substrate and the tannic acid-containing precursor solution to a first reaction to obtain PB@TA; and
subjecting the PB@TA, a material for forming the second coating layer and a second solvent to a second reaction to obtain the cathode material.

The present invention also provides a sodium ion battery including a cathode material as described above.

Compared to the prior art, the beneficial effects of the present invention are as below:
1. The cathode material provided in the present invention effectively solves the problem of hygroscopicity of Prussian Blue cathode material, and effectively improves the storage property and electrochemical performance of the cathode material in air, by coating the Prussian Blue substrate with two layers without affecting the electrochemical performance.
2. The preparation method of the cathode material according to the present invention, which includes simple steps, is capable of uniformly coating two layers on the surface of the Prussian Blue substrate to effectively suppress the hygroscopicity of the cathode material.
3. The cathode material of the present invention is used in sodium ion batteries, thereby improving storage performance of the sodium ion batteries in high humidity environments while ensuring excellent cycling and rate performance of the sodium ion battery.

### BRIEF DESCRIPTION OF DRAWINGS

In order to provide a clearer explanation of the specific embodiments of the present invention or the technical solutions in the prior art, a brief introduction will be given below to the drawings used in the detailed description or the prior art. It is obvious that the drawings in the description below are some of the embodiments of the present invention, and other drawings can be obtained by a person skilled in the art without involving any inventive effort.
FIG. 1 shows theX-Ray Diffraction (XRD) pattern of the PB and PB@TA@ODA of Example 1 according to the present invention.
FIG. 2 shows the scanning electron microscope (SEM) image of the PB@TA@ODA of Example 1 according to the present invention.
FIG. 3 shows the thermogravimetric (TG) curves of PB and PB-7D of Example 1 according to the present invention.
FIG. 4 shows the TG curves of PB@TA@ODA and PB@TA@ODA-7D of Example 1 according to the present invention.
FIG. 5 shows the optical photograph of the wetting angle of the cathode electrode sheet prepared using the PB of Example 1 according to the present invention.
FIG. 6 shows the optical photograph of the wetting angle of the cathode electrode sheet prepared using the PB@TA@ODA of Example 1 according to the present invention.
FIG. 7 shows the charge-discharge curves for sodium ion batteries prepared with the PB and PB@TA@ODA of Example 1, respectively, according to the present invention.
FIG. 8 shows the cycle profiles of the sodium ion batteries prepared with the PB and PB@TA@ODA of Example 1, respectively, according to the present invention.
FIG. 9 shows the charge-discharge curves for sodium ion cells prepared with the PB-7D and PB@TA@ODA-7D of Example 1, respectively, according to the present invention.
FIG. 10 shows the cycle profiles of sodium ion batteries prepared with the PB-7D and PB@TA@ODA-7D of Example 1, respectively, according to the present invention.

### DETAILED DESCRIPTION

The examples of the present invention will now be described more fully hereinafter with reference to the accompanying drawings and detailed description, but it will be understood by a person skilled in the art that the examples described below are part, but not all, of the examples of the present invention and are presented by way of illustration only and should not be taken as limiting the scope of the present invention. Based on the examples of the present invention, all other examples obtained by a person skilled in the art without involving any inventive effort fall within the scope of protection of the present invention. Where specific conditions are not specified in the examples, they are carried out according to conventional conditions or conditions suggested by a manufacturer. The reagents or instruments used are not specified by the manufacturer and are conventional products commercially available.

In a first aspect, some examples of the present invention provide a cathode material including a Prussian Blue substrate, and a first coating layer and a second coating layer sequentially coated on the surface of the Prussian Blue substrate;
a material forming the first coating layer includes a polymer of tannic acid; and a material forming the second coating layer includes at least one of hexadecylamine, octadecylamine, octadecyl phosphate, N-phenyl-bis(trifluoromethanesulfonimide), 1H,1H,2H,2H-perfluorodecyl triethoxysilane, and 1H,1H,2H,2H-perfluorodecanethiol.

The cathode material of the present invention, where a tannic acid polymer, is uniformly and completely coated on the surface of a Prussian Blue substrate to form a first coating layer, i.e., a tannic acid polymer layer; the second coating layer is coated on the surface of the first coating layer and is connected to the first coating layer via a chemical bond.

The cathode material of the present invention changes the surface of the Prussian Blue substrate from hydrophilic to hydrophobic by coating the surface of the Prussian Blue substrate with two layers. Research shows that the cathode material provided by the present invention has less weight loss at 150-250°C after being left for 7 days at normal temperature, normal pressure, and high humidity. Therefore, the cathode material provided by the present invention has good hygroscopicity inhibition at normal temperature, normal pressure, and high humidity. The present invention effectively solves the problem of Prussian Blue cathode material being easily hygroscopic without affecting its electrochemical performance, resulting in good storage performance in air and excellent electrochemical performance of the cathode material.

For the cathode material of the present invention, the Prussian Blue substrate serves as an active substance, the first coating layer provides a bonding group for the second coating layer, and the second coating layer forms a hydrophobic coating layer; through the interaction of the three, the Prussian Blue cathode material has excellent electrochemical performance and good environmental storage.

In a preferred embodiment, the Prussian Blue substrate has a chemical formula of NaₓMₐM'_{b}(CN)₆·zH₂O, where M and M' are each independently selected from Ni, Cu, Fe, Mn, Co, and Zn, 0 <x<2, 0<a<1, 0<b<1, and z>0. M and M' may be the same or different.

In a preferred embodiment, the Prussian Blue substrate includes at least one of NaₓFeₐ[Fe_{b}(CN)₆]·zH₂O, NaₓMnₐ[Fe_{b}(CN)₆]·zH₂O, NaₓNiₐ[Fe_{b}(CN)₆]·zH₂O and NaₓCoₐ[Fe_{b}(CN)₆]·zH₂O.

In a preferred embodiment, a particle size of the cathode material is 200-300 nm; typically, but not by way of limitation, for example, the particle size of the cathode material is 200 nm, 220 nm, 240 nm, 260 nm, 280 nm, 300 nm, or a value ranging between any of the two thereof.

In a preferred embodiment, the first coating layer has a thickness of 3 to 4 nm; typically, but not by way of limitation, the thickness of the first coating layer can be, for example, 3 nm, 3.5 nm, 4 nm, or a value ranging between any of the two thereof.

In a preferred embodiment, the second coating layer has a thickness of 1-2 nm; typically, but not by way of limitation, the thickness of the second coating layer can be, for example, 1 nm, 1.5 nm, 2 nm, or a value ranging between any of the two thereof.

In the cathode material of the present invention, if the thickness of the first coating layer is too high, the interfacial transport of sodium ions is affected, and if it is too low, a complete coating layer cannot be formed; if the thickness of the second coating layer is too high, the interfacial transport of sodium ions is affected, and if it is too low, the second coating layer does not have good hydrophobicity.

In a second aspect, some examples of the present invention also provide a preparation method of the above cathode material, which includes the steps of:
mixing tannic acid, formaldehyde, ammonium ions, a first solvent, and water to obtain a tannic acid-containing precursor solution;
subjecting the Prussian Blue substrate (PB) and the tannic acid-containing precursor solution to a first reaction to obtain PB@TA; and
subjecting PB@TA, a material for forming the second coating layer and the second solvent to a second reaction to obtain a cathode material.

In the present invention, a precursor solution of tannic acid is subjected to a first reaction with a Prussian Blue substrate. Tannic acid, formaldehyde and ammonium ions undergo a Mannich reaction and are condensed to form a tannic acid polymer, and a uniform layer of tannic acid polymer is formed on the surface of the Prussian Blue substrate to obtain a Prussian Blue substrate coated with tannic acid polymer (PB@TA); then, coating is performed with a material having hydrophobicity, for example, octadecylamine undergoes Michael addition reaction or Schiff base reaction with the hydroxyl or carbonyl group in the tannic acid polymer to form a second coating layer on the surface of PB@TA, thereby obtaining a cathode material (PB@TA@ODA) having a double-layer coating structure.

In a preferred embodiment, the first reaction and the second reaction are each independently performed at a temperature in a range from 25 to 80°C; the first reaction and the second reaction are each independently performed for 1 to 72 hours; typically, but not by way of limitation, for example, the temperatures for the first reaction and the second reaction can each independently be 25°C, 30°C, 40°C, 50°C, 60°C, 70°C, 80°C, or a value ranging between any of the two thereof; and the first reaction and the second reaction are each independently performed for 1 h, 10 h, 20 h, 30 h, 40 h, 50 h, 60 h, 70 h, or a value ranging between any of the two thereof.

In a preferred embodiment, the preparation method of the cathode material further includes: after the first reaction, performing a first washing and a first drying; and after the second reaction, performing a second washing and a second drying; and preferably, the drying is performed at a temperature in a range from 50 to 200°C.

In a preferred embodiment, the molar ratio of tannic acid to formaldehyde is (0.022-0.024): 1; preferably 0.023:1.

In a preferred embodiment, the substance providing the ammonium ions includes ammonia water.

In a preferred embodiment, the concentration of ammonia water is 20-30 wt%, and the usage ratio of ammonia water to tannic acid is 1 mL: 0.1-1 mmol; typically, but not by way of limitation, for example, ammonia water and tannic acid are used in a ratio of 1mL: 0.1 mmol, 1mL: 0.3 mmol, 1mL: 0.5 mmol, 1mL: 0.7 mmol, 1mL: 1 mmol, or a value ranging between any of the two thereof.

In a preferred embodiment, a preparation method of a tannic acid-containing precursor solution includes: mixing an aqueous tannic acid solution, an aqueous formaldehyde solution, ammonia water, a first solvent and water to obtain a tannic acid-containing precursor solution; preferably, the concentration of the aqueous tannic acid solution is from 0.01 to 0.02 mol/L, the concentration of the aqueous formaldehyde solution is from 2 to 5 wt%, and the concentration of the ammonia water is from 20 to 30 wt%; and more preferably, the volume ratio of ammonia water to aqueous tannic acid solution is 1:(15-25), and preferably 1:20.

In a preferred embodiment, the pH of the first reaction system is between 6 and 7.

The tannic acid, formaldehyde and ammonium groups undergo a Mannich reaction to form a tannic acid polymer, and the above-mentioned amount of ammonia water can provide sufficient NH₄⁺, which accelerates the reaction rate.

In a preferred embodiment, a mass ratio of the Prussian Blue substrate to tannic acid is 1:(0.05-2); typically, but not by way of limitation, for example, the mass ratio of the Prussian Blue substrate to the tannic acid is 1:0.05, 1:0.08, 1:0.1, 1:0.2, 1:0.4, 1:0.6, 1:0.8, 1:1, 1:1.2, 1:1.4, 1:1.6, 1:1.8, 1:2, or a value ranging between any of the two thereof; preferably, the mass ratio of the Prussian Blue substrate to the tannic acid is 1:(0.15-0.2).

In a preferred embodiment, a mass ratio of PB@TA to the material forming the second coating layer is 1:(0.1-5); typically, but not by way of limitation, for example, the mass ratio of the PB@TA to the material forming the second coating layer may be 1:0.1, 1:0.5, 1:1, 1:1.5, 1:2, 1:2.5, 1:3, 1:3.5, 1:4, 1:4.5, 1:5, or a value ranging between any of the two thereof; and preferably, the mass ratio of the PB@TA to the material forming the second coating layer is 1:(0.8-1.2).

In a preferred embodiment, the first solvent includes ethanol.

In a preferred embodiment, the tannic acid and the first solvent are present in a mass ratio of 1:(45-50).

In a preferred embodiment, the volume ratio of the first solvent to water is (0.01-1):1.

In a preferred embodiment, the second solvent includes at least one of methanol, ethanol, ethylene glycol, acetone, and tetrahydrofuran.

In a preferred embodiment, the mass ratio of the material of the second coating layer to the second solvent is 1:(50-55).

In a preferred embodiment, the Prussian Blue substrate is prepared by a liquid phase method or a solid phase method.

In a preferred embodiment, the preparation method of the Prussian Blue substrate includes the steps of
reacting an aqueous solution of Na₄Fe(CN)₆ with an aqueous solution of a soluble metal salt to obtain a Prussian Blue substrate;
where the soluble metal salt includes sodium citrate and at least one of a Ni salt, a Cu salt, a Fe salt, a Mn salt, a Co salt, and a Zn salt.

In a preferred embodiment, the preparation method of the Prussian Blue substrate includes the steps of
Ball-milling Na₄Fe(CN)₆ and a metal salt to obtain a Prussian Blue substrate, where the metal salt includes at least one of a Ni salt, a Cu salt, a Fe salt, a Mn salt, a Co salt and a Zn salt.

In a third aspect, examples of the present invention also provide a sodium ion battery including the cathode material described above.

The use of the cathode material of the present invention in a sodium ion battery improves the storage performance at normal temperature, normal pressure, and high humidity on the basis of ensuring that the sodium ion battery has excellent cycle performance and rate performance.

Hereinafter, examples of the present invention will be described in detail with reference to examples, but a person skilled in the art will understand that the following examples are only for illustrating the present invention and should not be construed as limiting the scope of the present invention. Where specific conditions are not specified in the examples, they are carried out according to conventional conditions or conditions suggested by a manufacturer. The reagents or instruments used are conventional products that can be obtained commercially without indicating the manufacturer.

### Example 1

This example provides a preparation method of a cathode material, which includes the steps of:
S 1: 4 mmol of Na₄Fe(CN)₆·10H₂O was dissolved in 200 mL of deionized water to form a solution A; 6 mmol of FeSO₄·7H₂O and 15 g of sodium citrate were dissolved in 200 mL of deionized water to form a solution B;
the solution A was added to the solution B, and then after being left at normal temperature (25°C) for 6 h, solid-liquid separation was performed to obtain a filter cake which was centrifugally washed three times with deionized water and absolute ethanol, and dried in a blast drying oven at 80°C for 12 h to obtain Prussian Blue substrate Na_{1.54}Fe[Fe(CN)₆]·0.96H₂O.
S2: 2 mL of an aqueous tannic acid solution with a concentration of 0.015 M, 1 mL of an aqueous formaldehyde solution (3.7wt%), 0.1 mL of ammonia water (with a concentration of 25wt%) and 3 mL of ethanol were added into 13 mL of deionized water, and thoroughly mixed to obtain a tannic acid precursor solution;
0.3 g of Na_{1.54}Fe[Fe(CN)₆]·0.96H₂O was added to the tannic acid precursor solution, the mixture was stirred at room temperature (25°C) for 24 h, then filtered and dried under vacuum at 80°C to obtain PB@TA.
S3: 0.3 g of octadecylamine was added into 20mL of ethanol and fully dissolved to obtain an octadecylamine precursor solution;
0.3 g of PB@TA was added to the octadecylamine precursor solution, the mixture was stirred at room temperature (25°C) for 24 h, then filtered, and vacuum dried at 80°C to obtain the cathode material (PB@TA@ODA).

### Example 2

This example provides a preparation method of a cathode material, which includes the steps of:
S1: under an inert atmosphere, 5 mmol of MnCl₂·4H₂O and 5 mmol of Na₄Fe(CN)₆·10H₂O were added into an agate ball-milling tank with a ball-to-material ratio of 1:20, and ball-milling was performed at a rate of 300 r/min for 12 h to obtain a mixture; the mixture was first washed and centrifuged three times with absolute ethanol, then washed and centrifuged three times with deionized water, and then dried in a vacuum oven at 80°C for 12 h to obtain Prussian Blue substrate Na_{1.63}Mn[Fe(CN)₆]·1.41H₂O.
S2: 2 mL of an aqueous tannic acid solution with a concentration of 0.015 M, 1 mL of an aqueous formaldehyde solution (3.7wt%), 0.1 mL of ammonia water (with a concentration of 25wt%) and 3 mL of ethanol were added into 13 mL of deionized water, and thoroughly mixed to obtain a tannic acid precursor solution;
0.15 g of Na_{1.63}Mn[Fe(CN)₆]·1.41H₂O was added to the tannic acid precursor solution, the mixture was stirred at 40°C for 24 h, then filtered and dried at 80°C under vacuum to obtain PB@TA.
S3: 0.3 g of octadecylamine was added into 20mL of ethanol and fully dissolved to obtain an octadecylamine precursor solution;
0.15 g of PB@TA was added to the octadecylamine precursor solution, the mixture was stirred at 60°C for 24h, then filtered, and vacuum dried at 80°C to obtain the cathode material (PB@TA@ODA).

### Example 3

The preparation method of the cathode material provided in this example is the same with Example 1, except that in step S2, the mass of Na_{1.54}Fe[Fe(CN)₆]·0.96H₂O was 1 g.

### Example 4

The preparation method of the cathode material provided in this example is the same with Example 1, except that in step S2, the mass of Na_{1.54}Fe[Fe(CN)₆]·0.96H₂O was 0.025 g.

### Example 5

The preparation method of the cathode material provided in this example is the same with Example 1, except that in step S3, the mass of PB@TA was 3 g.

### Example 6

The preparation method of the cathode material provided in this example is the same with Example 1, except that in step S3, the mass of PB@TA was 0.06 g.

### Example 7

The preparation method of the cathode material provided in this example is the same with Example 1, except that the mass of Na_{1.54}Fe[Fe(CN)₆]·0.96H₂O in step S2 was 0.1 g, and the mass of PB@TA in step S3 was 0.1 g.

### Example 8

The preparation method of the cathode material provided in this example is the same with Example 1, except that in step S3, octadecylamine was replaced with octadecyl phosphate.

### Example 9

The preparation method of the cathode material provided in this example is the same with Example 1, except that in step S3, octadecylamine was replaced with 1H,1H,2H,2H-perfluorodecanethiol.

### Example 10

The preparation method of the cathode material provided in this example is the same with Example 1, except that in step S3, octadecylamine was replaced with N-phenyl-bis(trifluoromethanesulfonimide).

### Comparative Example 1

The preparation method of the cathode material provided in this Comparative Example is the same with Example 1, except that in step S2, the aqueous formaldehyde solution and ammonia water were not added.

### Comparative Example 2

The preparation method of the cathode material provided in this Comparative Example is the same with Example 1, except that step S1 and step S2 were cancelled, and Prussian Blue substrate (PB) Na_{1.54}Fe[Fe(CN)₆]·0.96H₂O in Example 1 was directly subjected to step S3 to obtain sample PB@ODA.

### Experimental Example 1

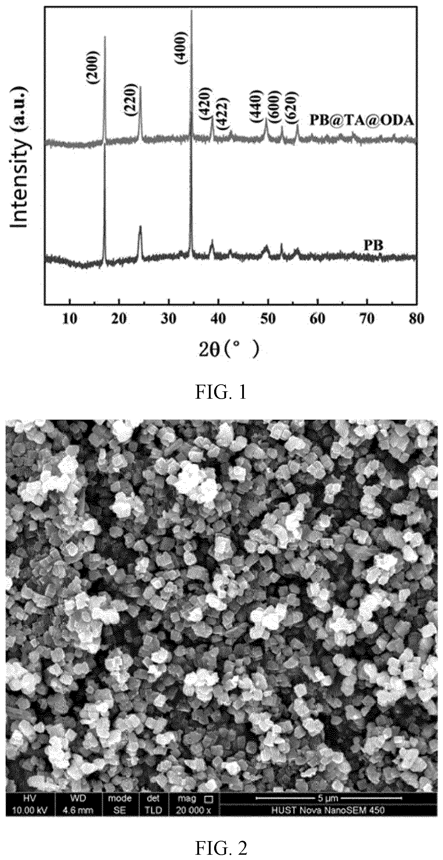

XRD tests were performed on the PB and PB@TA@ODA in Example 1, and the results are shown in FIG. 1.

As can be seen from FIG. 1, the structure of PB@TA@ODA is not significantly changed compared to that of PB and remains a pure cubic Prussian Blue structure.

Scanning electron microscopy test was performed on the PB@TA@ODA of Example 1 and the results are shown in FIG. 2.

As can be seen from FIG. 2, PB@TA@ODA still maintains a cubic morphology.

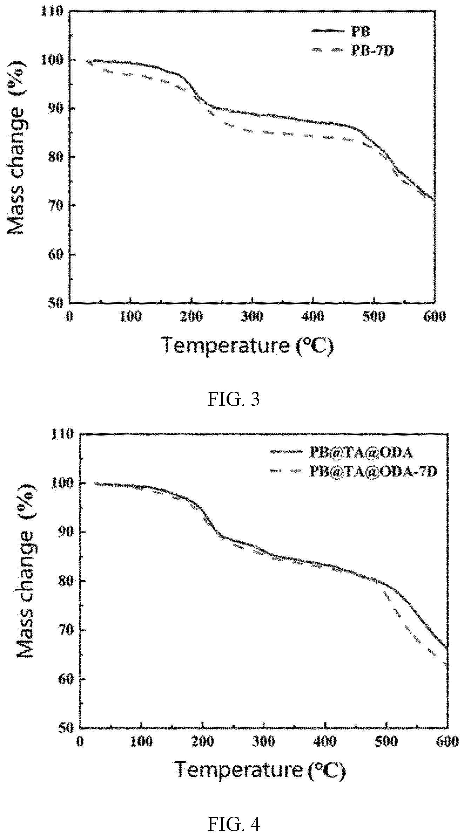

Thermogravimetric tests were performed on the PB, PB-7D, PB@TA@ODA and PB@TA@ODA-7D of Example 1, the results of which are shown in Figs. 3 and 4. PB-7D means that PB is left at normal temperature, normal pressure and 80 % humidity for seven days, and PB@TA@ODA-7D means that PB is left at normal temperature, normal pressure and 80 % humidity for seven days.

As can be seen from Figs. 3 and 4, the weight loss of sample PB-7D at 150°C and 250°C was significant, and the adsorbed water and interstitial water in the material increased significantly. However, the TG curve of PB@TA@ODA-7D is almost unchanged compared with PB@TA@ODA, exhibiting excellent ability to inhibit hygroscopicity.

### Experimental Example 2

A preparation method of a cathode electrode sheet includes the steps of a cathode material, a conductive agent (Ketjen Black and Superconducting carbon black (Super P) with a mass ratio of 1:1) and polyvinylidene fluoride (PVDF) were weighed in a mass ratio of 7:2:1, and added to a certain amount of N-methyl pyrrolidone (NMP) as a solvent, and the mixture was ground into a uniform slurry. The slurry was uniformly coated on aluminum foil and then baked at 70°C for 24 h. Finally, a small circular piece with a diameter of 8 mm is cut to obtain the cathode electrode sheet with a loading of 1.6-2.4 mg/cm².

A preparation method of a sodium ion battery includes the steps of: the above-mentioned cathode electrode sheet was placed into a 2032-type battery case; a sodium sheet was used as a negative electrode; glass fiber was used as a separator; foamed nickel was used as a support sheet; NaClO₄ dissolved, at a concentration of 1mol/L, in ethylene carbonate (EC) and diethyl carbonate (DEC) in a volume ratio of 1:1 was used as an electrolyte; and 5% fluoroethylene carbonate (FEC) was added, and assembly was performed in an argon-filled glove box, with the water content and the oxygen content in the glove box strictly controlled to be less than 0.01 ppm and less than 0.05 ppm, to obtain the sodium ion battery.

The packaged sodium battery was placed at room temperature for 8 h, and the charge-discharge test was performed using a CT2001 charge-discharge tester from Wuhan Land Electronics Co., Ltd., and the charge-discharge voltage is set to be 2.0 V-4.2 V. In the cyclic performance test, the test was performed at a rate of 1 C(1 C=170mA g⁻¹).

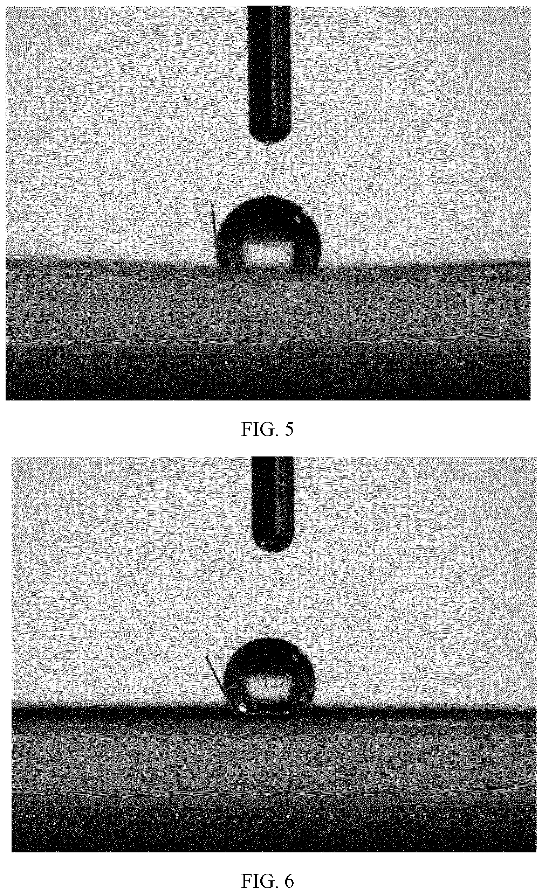

Cathode electrode sheets were prepared according to the above-mentioned preparation method of the cathode electrode sheet using the PB and PB@TA@ODA in Example 1 as cathode materials, respectively, and the wetting angles of the cathode electrode sheets were tested, and the results are shown in Figs. 5 and 6.

As can be seen from FIG. 5 and FIG. 6, FIG. 5 shows that the wetting angle of the cathode electrode sheet prepared using PB is 108°; FIG. 6 shows that the wetting angle of the cathode electrode sheet prepared with PB@TA@ODA is 127°, which is much larger than that of the cathode electrode sheet prepared with PB, and it can be seen therefrom that PB@TA@ODA has better hydrophobicity.

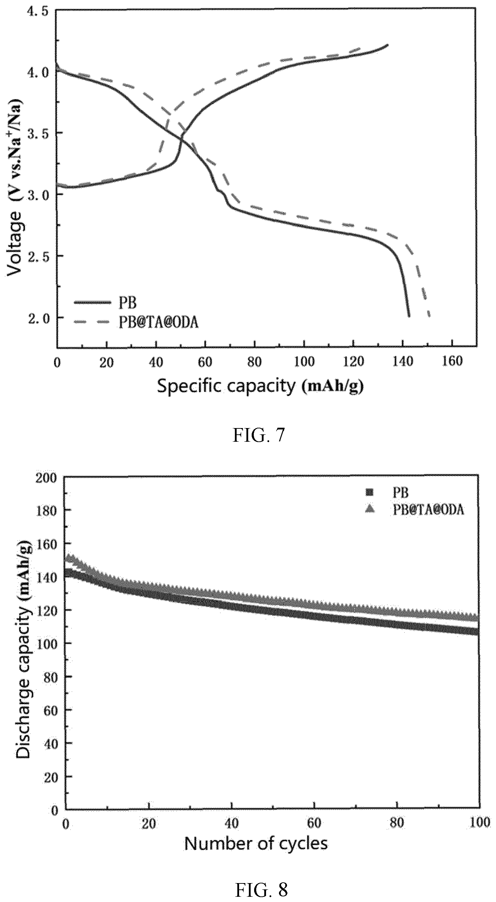

Sodium batteries were prepared using the PB, PB-7D, PB@TA@ODA and PB@TA@ODA-7D of Example 1 as cathode materials, respectively according to the above-mentioned preparation method for sodium ion batteries. Charge-discharge and cycling tests were performed on the sodium ion batteries, and the results are shown in Figs. 7, 8, 9 and 10. PB-7D means that PB is left at normal temperature, normal pressure and 80% humidity for seven days, and PB@TA@ODA-7D means that PB is left at normal temperature, normal pressure and 80% humidity for seven days.

It can be seen from FIG. 7 and FIG. 8 that the first cycle discharge capacities of sodium ion batteries prepared with PB and PB@TA@ODA are 142 mAh g⁻¹ and 150 mAh g⁻¹, respectively, with no significant difference, and the cycle performances are similar.

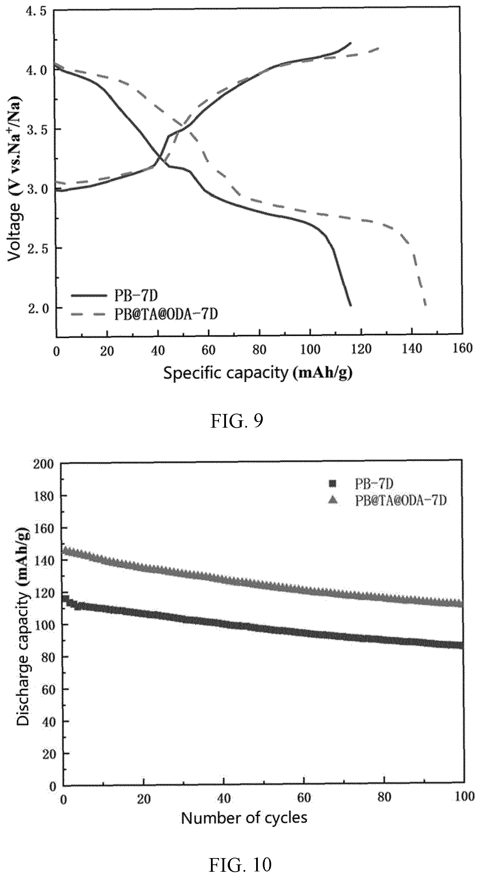

It can be seen from FIG. 9 that after PB is placed for seven days, the discharge capacity of in first cycle decays to 116 mAh g⁻¹, and the sodium storage performance thereof decreases significantly; however, the first discharge capacity of PB@TA@ODA-7D is still more than 145 mAh g⁻¹, compared with PB@TA@ODA, there is almost no capacity decay, showing better storage performance in normal temperature, normal pressure and high humidity environment.

As can be seen from FIG. 10, PB@TA@ODA-7D, which is the cathode of the sodium ion battery, has very high cycle stability, exhibits high first-cycle efficiency and higher specific capacity, and exhibits excellent hydrophobic properties.

Sodium batteries were prepared according to the above-mentioned preparation method of sodium ion batteries using the prepared cathode materials of Examples 1-10 and Comparative Examples 1-2 and the cathode materials after being left for 7 days, respectively, and charge-discharge and cycling tests were performed on the sodium ion batteries, and the results thereof are shown in Table 1.

**Table 1**

| | First discharge capacity of the cathode material (mAh g⁻¹) | First discharge capacity of the cathode material after being left for 7 days (mAh g⁻¹) | Capacity retention rate of the cathode material after one hundred cycles (%) | Capacity retention rate of the cathode material after being left for 7 days and one hundred cycles (%) |
|---|---|---|---|---|
| Example 1 | 150 | 145 | 75.3 | 75.8 |
| Example 2 | 143 | 137 | 61.4 | 59.8 |
| Example 3 | 152 | 147 | 73.8 | 66.1 |
| Example 4 | 132 | 126 | 78.3 | 72.1 |
| Example 5 | 149 | 143 | 72.4 | 61.9 |
| Example 6 | 138 | 135 | 69.4 | 71.3 |
| Example 7 | 129 | 125 | 72.2 | 74.3 |
| Example 8 | 147 | 143 | 74.2 | 75.8 |
| Example 9 | 148 | 146 | 71.0 | 71.5 |
| Example 10 | 146 | 143 | 73.6 | 72.9 |
| Comparative Example 1 | 151 | 132 | 74.9 | 68.2 |
| Comparative Example 2 | 149 | 129 | 75.4 | 62.2 |

It can be seen from Table 1 that Prussian Blue can exhibit both excellent electrochemical performance and good environmental storage property under the double coating of the tannic acid polymer and the second coating material in a suitable amount.

While particular examples of the present invention have been illustrated and described, it is to be understood that the foregoing examples are merely illustrative and not restrictive of the present invention. A person skilled in the art will appreciate that modifications may be made to the technical solutions described in the foregoing examples, or equivalents may be substituted for some or all of the technical features thereof, without departing from the spirit and scope of the present invention. However, these modifications or substitutions do not bring the essence of the corresponding technical solutions out of the scope of the technical solutions of the various examples of the present invention; it is therefore intended to cover in the appended claims all such alternatives and modifications that are within the scope of this invention.

## Claims

1. A cathode material, **characterized in that** the cathode material comprises a Prussian Blue substrate, and a first coating layer and a second coating layer successively coating a surface of the Prussian Blue substrate;
wherein a material forming the first coating layer comprises a polymer of tannic acid; and
a material forming the second coating layer comprises at least one of hexadecylamine, octadecylamine, octadecyl phosphate, N-phenyl-bis(trifluoromethanesulfonimide), 1H, 1H,2H,2H-perfluorodecyl triethoxysilane, and 1H,1H,2H,2H-perfluorodecanethiol.

2. The cathode material of claim 1, **characterized in that** the Prussian Blue substrate has a chemical formula of NaₓMₐM'_{b}(CN)₆·zH₂O, wherein M and M' are each independently selected from Ni, Cu, Fe, Mn, Co, and Zn, 0 <x<2, 0<a<1, 0<b<1, and z>0.

3. The cathode material of claim 1, **characterized in that** a particle size of the cathode material is 200-300 nm.

4. The cathode material of claim 1, **characterized in that** the first coating layer has a thickness of 3-4 nm.

5. The cathode material of claim 1, **characterized in that** the second coating layer has a thickness of 1-2 nm.

6. A preparation method of the cathode material of any one of claims 1 to 5, **characterized in that** the preparation method comprises steps of
mixing tannic acid, formaldehyde, ammonium ions, a first solvent, and water to obtain a tannic acid-containing precursor solution;
subjecting a Prussian Blue substrate and the tannic acid-containing precursor solution to a first reaction to obtain PB@TA; and
subjecting the PB@TA, a material for forming the second coating layer and a second solvent to a second reaction to obtain the cathode material.

7. The preparation method of claim 6, **characterized in that** the first reaction and the second reaction are each independently performed at a temperature in a range from 25 to 80°C.

8. The preparation method of claim 6, **characterized in that** the first reaction and the second reaction are each independently performed for 1 to 72 hours.

9. The preparation method of claim 6, **characterized in that** a molar ratio of the tannic acid and the formaldehyde is (0.022-0.024): 1.

10. The preparation method of claim 6, **characterized in that** a substance providing the ammonium ions comprises ammonia water.

11. The preparation method of claim 10, **characterized in that** a concentration of the ammonia water is 20-30 wt%, and the ammonia water and the tannic acid are used in a ratio of 1 mL:0.1-1 mmol.

12. The preparation method of claim 6, **characterized in that** a mass ratio of the Prussian Blue substrate to the tannic acid is 1:(0.05-2).

13. The preparation method of claim 6, **characterized in that** a mass ratio of the PB@TA to the material forming the second coating layer is 1 :(0.1-5).

14. The preparation method of claim 6, **characterized in that** the first solvent comprises ethanol; and/or
the second solvent comprises at least one of methanol, ethanol, ethylene glycol, acetone, and tetrahydrofuran.

15. A sodium ion battery, comprising the cathode material of any one of claims 1 to 5.
